# EUROPEAN PATENT APPLICATION

(11) **EP 3 470 752 A1**
(43) Date of publication of application: **17.04.2019**
(21) Application number: 18193160.1
(22) Date of filing: 07.09.2018
(51) Int. Cl.: F24S 90/00

(54) **SOLAR PANEL ARRANGEMENT**

(30) Priority: 11.10.2017 FI 20174234 U
(71) Applicant: Hybrid-Power Finland Oy, 00180 Helsinki (FI)
(72) Inventor: Rantapää, Hannu, 02570 SIUNTIO (FI)
(74) Representative: Kolster Oy Ab

(57) **Abstract**

A solar panel arrangement which comprises: at least two solar panel structures (112, 114, 116, 122, 124, 126) which are configured to be installed in a solar power plant park so that an intermediate space (130) is left between the solar panel structures; and a shield (140) which is configured to protect one or more cultivation tanks (232) or plantations (132) in the intermediate space (130), wherein said solar panel structures comprise a two-sided solar panel (510, 520A, 520B), at least one part (510) of which passes radiation (500) through, and wherein the shield (140) comprises a partly reflecting surface (530) which is configured to reflect at least part (504) of the radiation (502), passed through by said at least one part (510), back towards the two-sided solar panel (510, 520A, 520B).

## Description

### Field

The invention relates to solar panel arrangements. In particular, the invention relates to a solar panel arrangement that makes use of a two-sided solar panel structure.

### Background

The consumption of energy requires energy sources to be harnessed for consumption. Examples of the this include wind, coal, peat, water, and nuclear power. Solar panels offer a direct way to gather energy originating from the sun by means of, for example, the photoelectric effect (e.g. solar panels) or thermal collector (e.g. solar thermal collectors), wind and biofuel plants together with solar power plants may form hybrid solutions which in joint use enhance economic profitability. For the above reason, there exists an increasing need for solar power plants, such as solar power plant parks, in particular in joint use with wind and biofuel plants.

Solar power plants usually consist of a plurality of solar panels by means of which radiation from the sun may be converted into electric energy and/or thermal energy. Solar panels may be connected to systems intended for transferring and/or storing electric and/or thermal energy. Installation of solar panels requires space, and they may be installed on a field, for example.

For a solar panel to collect solar energy efficiently, the solar panel needs to be installed facing the sun. Preferably the solar panel has to be perpendicular to the sun. Out of the Equator, the sun shines obliquely, so it means that solar panels are usually installed obliquely (possibly adjustably) so that space is left between the solar panel installations. The space is created for each solar panel to be able to collect radiation directly originating from the sun. This space is not in practical use, and so the surface area required by solar power plants such as solar parks. For this reason, it may make sense to develop solution that address this problem. Making use of the space may create prerequisites and/or needs to come up with solutions that enhance the efficiency of solar panel systems. Even small improvement may result in major benefits.

### Brief disclosure

An embodiment is disclosed in the independent claim. Some embodiments of the invention are specified in the dependent claims. Some embodiments are presented in the description and figures.

According to an aspect of the invention, the solar panel system comprises a plurality of two-sided solar panels, such a solar panel on the one hand penetrating part of the solar radiation (e.g. light, visible light and/or another part of the electromagnetic spectrum), wherein the penetrating radiation may reach the space left between the solar panels and, in particular, a structure protecting the space. The protective structure may protect a cultivation tank or plantations and reflect part of the sunlight back towards the two-sided solar panel structure. Therefore a two-sided solar panel structure allows solar energy to be utilized as effectively as possible.

### Brief description of the figures

The invention is now described in closer detail with reference to the accompanying drawings, in which:
Figures 1 to 2 are cross sections of solar power plants according to some embodiment, where the space between the solar panel structures is utilized,
Figure 3 is a bird's eye perspective view of a solar power plant according to an embodiment,
Figures 4A to 4C show a device which may be used to carry out measures required by the solar power plant and/or its environment,
Figure 5 shows a solar power plant according to an embodiment, and
Figures 6A and 6B show an opening mechanism and closing mechanism of the protective structure according to some embodiments.

### Description of some embodiments

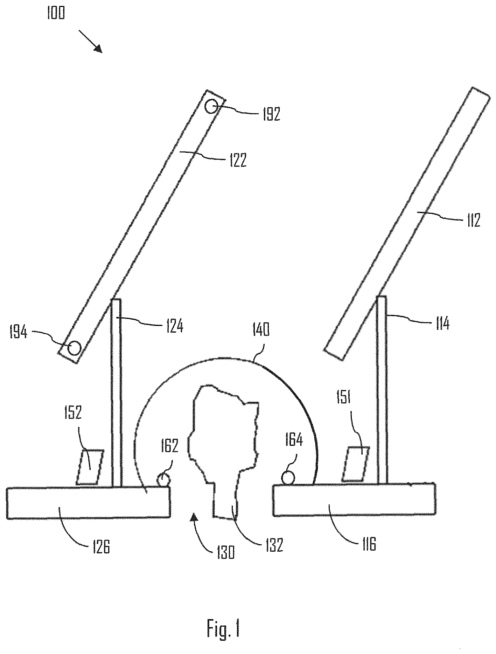

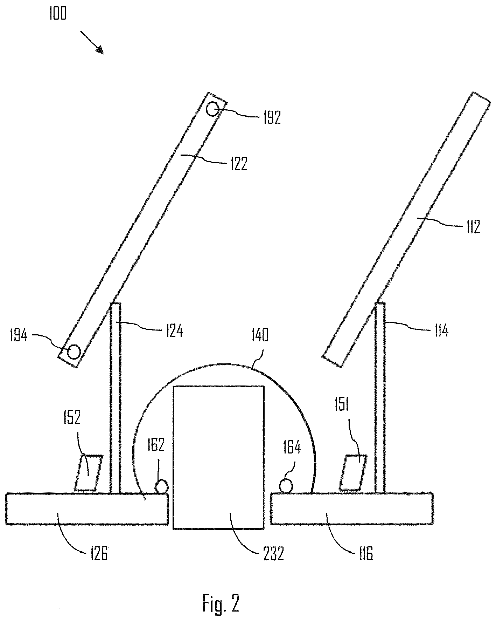

Figures 1 and 2 show a solar power plant 100, such as a solar power plant park, according to some embodiments. The solar power plant described may also be referred to as a solar power plant system, such a as a solar power plant park system (may also be referred to as a system 100). Referring to Figures 1 and 2, said system 100 may comprise one or more solar panel structures. One or more solar panel structures may comprise one or more solar panels. Solar panels may comprise solar cells that are adapted to convert solar radiation to electric energy through the photoelectric effect, and/or thermal collectors adapted to convert solar radiation into thermal energy. So, the system 100 may comprise a plurality of solar cells and/or a plurality of solar collectors, generally solar panels 112, 122.

Each solar panel structure may also comprise other parts in addition to the panels. For example, a solar panel structure may comprise a solar panel 112 and a structure which is adapted to make it possible to install the solar panel structure on the ground. Said structure may comprise a stand 116, for example. Said structure may, for example, comprise an arm 114 by means of which the panel 112 may be installed at the desired height. The arm 114 may be fixed to the stand 116 and panel 112.

The system may comprise a number of solar panel structures, such as a first solar panel structure 112, 114, 116 and a second solar panel structure 122, 124, 126. Each solar panel structure may thus comprise corresponding parts explained in greater detail in the above paragraph.

In any case, there will be a space 130 left between the solar panel structures, two or more, the space being associated with certain problems. The space 130 may be referred to as an intermediate space or waste space. The space 130 may entirely or partly cover the space that remains between two or more solar panel structures, that is, the space between the structures 112 to 116 and 122 to 126, for example. If a solar panel structure only comprises the panel 112 or 122, the space may be formed between the panels, only. On the other hand, even if other structures are used, the space 130 may nevertheless be formed between the panels, only (e.g. panels installed on the ground). In the examples shown in Figures 1 and 2, the space 130 specifically refers to the space left between the stands, but it may additionally or alternatively cover the space between the panels 112, 122 and/or the space between the arms 114, 124.

To solve the certain problems related to the space 130, a solution has been invented in which said space 130 is used for cultivating plantations or organisms. In such a case, the space 130 may partly or entirely transform from waste space to useful space. This is particularly noteworthy, because until now the goal has been to reduce said space 130 with solutions of different kinds, such as panel locating solutions. However, transforming the waste space into useful space may be beneficial from the viewpoint of the system 100.

So, in an embodiment, referring to Figure 1, the system 100 may comprise at least one plantation 132. Said at least one plantation 132 is located within the area of the space 130, in other words between the solar panel structures. In a second embodiment, referring to Figure 2, the system 100 may comprise at least one cultivation tank 232 for a plantation. Said at least one cultivation tank 232 is located within the area of the space 130, in other words between the solar panel structures. In some embodiments the system 100 comprises at least one cultivation tank 232 and at least one plantation 132. Said at least one cultivation tank 232 and at least one plantation 132 my be located within the area of the space 130. On the other hand, the plantation may be located, for example, between different two panel structures than the cultivation tank.

The plantation 132 may be a useful plant, bush, or energy plant. Said plant 132 may bear fruit, such as berries, or other plant products that may be gathered and made use of. The plant 132 or plants 132 may comprise strawberry bushes, currant bushes and/or sea-buckthorn bushes. It should be noted that plantation 132 may refer to one or more plants, bushes, or trees. In some embodiments, the plantation may comprise a lawn or field, such as a hayfield. In some embodiment, the plantation 132 is not one actively made, but emerged naturally (e.g. natural growth of hay on fields).

The cultivation tank 232 may comprise a fish-farming tank, for example. In an embodiment, the cultivation tank 232 has a cultivation platform floating on it. The cultivation platform may comprise plantations 132, for example. The cultivation platform may have, for example, lettuce the roots of which may extend through the cultivation platform to a liquid on the cultivation tank. The liquid may be water. The cultivation platform may be so made that it floats on the water or liquid (may e.g. comprise styrox). So, in an embodiment the system comprises a cultivation tank 232, such as a fish-farming tank, on which floats a platform to which a plantation 132 has been planted. There may be one or more such combinations, too, in the system, and they be installed between the panel structures.

In an embodiment, the system 100 comprises one or more thermal collectors 192, 194. The one or more thermal collectors 192, 194 may be part of the solar panel 112, 122. The thermal collectors 192, 194 may, as explained, gather thermal energy of the sun, which may be used for heating the cultivation tanks 232 and/or plantations 132, for example. In other words, the panels, in particular the thermal collectors, may be operationally connected to the cultivation tank 232 and/or plantation 132 so that the collected thermal energy may be transferred to the cultivation tanks 232 and/or plantation area.

In an embodiment, the system 100 comprises one or more shields 140. One shield 140 may, for example, be adapted to protect the cultivation tank 232 or plantation 132, or possibly more than one plantation 132 and/or cultivation tanks 232. Said shield 140 may be collapsible. This may mean that the shield 140 may, if needed, be placed over the plantations 132 or tank 232 and removed as required. When the shield 140 has been placed over the plantations 132 or tank 232, the plantation 132 or tank 232 may be inside the shield 140. The shield 140 may comprise transparent material or be made of a transparent material. The shield 140 may this act as a greenhouse. The transparent material may comprise plastic and/or glass, for example.

In an embodiment, the system 100 comprises and irrigation system. The irrigation system may comprise one or more pipes 162. The irrigation system may be used to water the plantations and/or filling up the cultivation tanks.

In an embodiment, the pipe 162 may be used for heating the tanks 232 and/or plantations 132. For example, the pipe 162 or several of them may run in the tank, in which tank 162 warm water may be circulated, which warms up water in the tank 232 or the space formed by the shield 140. In other words, the pipe 162 may also run inside the shield 140 as the shield 140 is pulled open over the plantations 132. This may be seen in Figures 1 and 2. As mentioned in the above, the system 100 may have one or more pipes which are adapted to bring irrigation water to the plantations 132, fill up tanks 232, warm up tanks 232, warm up plantations 132 and/or warm up the space formed by the shield 140.

In an embodiment, the solar panel(s) 112, 122 is/are at least partially translucent. There may be one or more panels In some embodiments, the panels 112. 122 are translucent. Thus, they may be used to form, at least partly, a shield, such as the shield 140, which goes between the panels 112. 122, for example.

In an embodiment, thermal and/or electric energy collected by the solar panels 112, 122 are used to warm up the spaces formed by the shields 140 and/or tanks 232. Thermal energy may be directly used by water circulation piping. Electric energy may be converted into thermal energy by means of elements. Surplus energy may be fed to an external system such as the electric and/or district heating network, additional heat for a bioprocess.

In an embodiment, the system 100 comprises one or more control elements 151, 152. The control element 151, 152 may comprise an automated system adapted to control the panel structure. The direction of the solar panel 112, for example, may be changed according to the position of the sun. In an embodiment, each solar panel structure comprises its own control element. However, in some embodiments the control element is common.

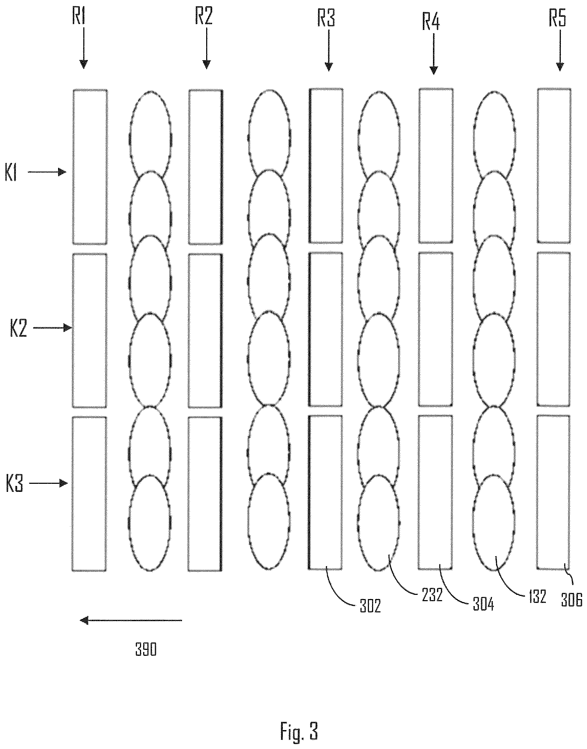

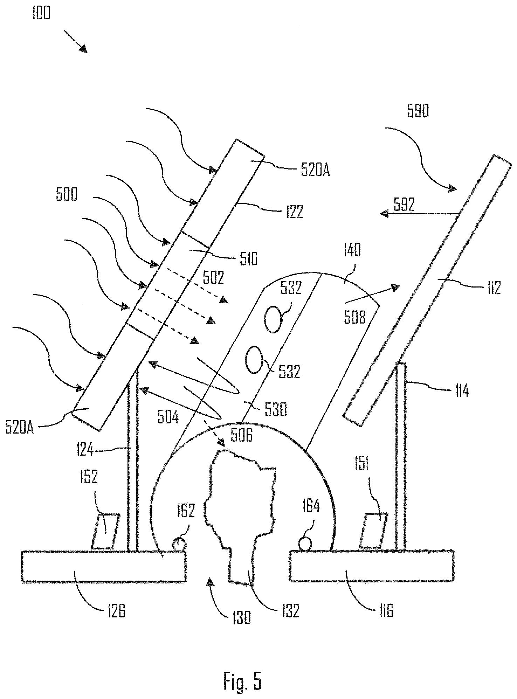

Figure 3 shows an embodiment of the system 100. Referring to Figure 3, the system 100 may comprise one or more rows R1-R5 and one or more columns K1-K3, which together form a solar panel matrix having one or more solar panel structures 302-306. Each solar panel structure 302-306 may comprise a solar panel and additionally a stand and/or arm (as in Figures 1 and 2). Between the rows R1-R5 space (such as the space 130) may be left, where plantations 132 and/or tanks 232 have been placed, and which may be protected by a shield 140. In some embodiment, a space is additionally or alternatively formed between the columns K1-K3. The columns may also be referred to as lines. In an embodiment, the panels are placed substantially in the direction of the arrow 390. The solar panel structures 302-306 may comprise a similar solar panel structure or structures as those shown in Figure 5.

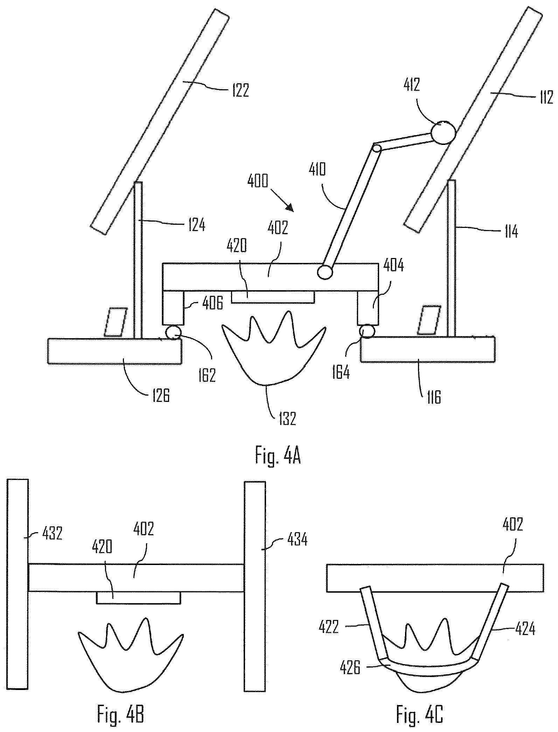

Figures 4A to 4C show a device according to an aspect of the invention. Said device may be used in the system 100 and/or it may be part of the system 100. Referring first to Figure 4A, the device 400 is adapted for gathering plantations 132 or parts of plantations 132 placed between solar panel structures 112,114,116,122,124,126 of the solar power plant 100. In an embodiment, said device 400 is adapted to service the cultivation tanks 232.

The device 400 may comprise a vehicle 402, 404, 406 which is adapted to move in the intermediate space 130 between two or more solar panel structures. In addition, the device 400 may comprise a collector 420 which is adapted to gather plantations 132 or parts of plantations 132 in said intermediate space 130. The device 400 may also comprise a cleaning arms 410, 412 which is adapted to clean at least on surface of the solar panels 112 while the device 400 is in said intermediate space 130.

So, the described device 400 makes it possible, in accordance with the invention, to attend to measures relating to the plantations 132 and measures relating to the solar panels with the same device. Furthermore, the device 400 may see to the measures in questions in one and the same run. For example, the device 400 may move between the rows R1 and R2, and at the same time wash the panels of R2 and attend to the plantations between the rows. The panels in the row R1 may also be washed, but it may be specifically practical to wash the panels of R2, because their solar energy collecting surface is in such a situation towards the intermediate space 130. This may be seen in Figure 4A, in which the cleaning arm 410, 412 is adapted to wash the surface of the panel 112.

In an embodiment, the vehicle 402-406 comprises a body 402 and at least two movement means 404, 406, such as wheels of rail counterparts. Preferably four wheels are used, so that the device 400 moves steadily. The wheels may be adapted to run on a surface, such as the ground, and/or on rails. The wheels may have grooves in them for rails. The device 400 may be adapted to move in such a manner that is moves above the plantations 132. For example, the system 100 may comprise one or more rails 164 along which said vehicle 402-406 is adapted to move in the intermediate space 130. In a preferred embodiment, the system comprises two rails 162, 164 in the intermediate space 130. Both or the rails, or one of them, may be a water pipe (e.g. heating or irrigation pipe). One 162 of the rails may be located in the area of the platform 126, and the other 164 in the area of stand 116. The rails may be fixed to the platform. Hence, the device 400 may run in the intermediate space on the rails 162, 164. In an embodiment, the rails 162, 164 are not needed. In such a case, the device 400 may run on wheels, for example, so that the wheelbase of the wheels is more than the width of the plantations.

In an embodiment, the elements 404 and 406 comprise counterparts for the rails. The counterparts may be, for example, wheels that have grooves for the rails.

In an embodiment, the vehicle 402, 432, 434 comprises wheels 432, 434. The wheels may be, for example, rubber tyres that are adapted to move the device 400 so that it runs in the intermediate space 130 and above the plantations. An example of this may be seen in Figure 4B, showing an embodiment.

Figure 4C shows an embodiment of the device 400. Referring to Figure 4C, in an embodiment the collector 420 comprises a shaker 422, 424, 426 to remove parts of the plantations 132, such as berries, from the plantations 132. The shaker may also be used to detach leaves, for example. The shaker may comprise one or more arms and/or gripping members 422, 424, 426, by means of which the shaker may grab a plantation 132 and shake it so that the shaking causes plantation parts, such as berries, to fall into a collecting container of the collector 420. Like this, berries may be collected from the plantations.

In some embodiments, the collector 420 comprises a cutter and collecting container, wherein the cutter may be adapted to cut plantation parts which may be collected in the collecting container. In such a case, the collector does not necessarily comprise a shaker, but may in some embodiment comprise both.

As seen in Figure 4C, the collector 420 may open up into an operational mode so that plantation parts 132 may be collected. It is, however, possible that said collector remains in the operational mode all the time.

For the device 400 to be able to wash the panels, it includes an operationally connected cleaning arm 410, 412. In an embodiment, the cleaning arm comprises a hydraulic arm 410 which is adapted to move the cleaning arm 410, 412, and specifically a cleaning head 412, which may clean panels.

In an embodiment, the cleaning ar, 410, 412 comprises a brush washing apparatus 410 in order to clean at least one surface of the solar panels. The brush washing apparatus may comprise at least one brush. Additionally of alternatively, liquid may be utilized in the wash. So the device 400 may comprise a liquid container, such as a water container, to store washing liquid. The cleaning arm 410, 412 may be operationally connected to the container so that the cleaning are may spray washing liquid on the panels from the container. In some embodiments, this may take place simultaneously with brushing.

The device 400 may comprise a control unit to control the device 400. Controlling may comprise moving and controlling the vehicle 402, 404, 406, 432, 434, the cleaning arm 410, 412 and/or collector 420. So, the control unit may comprise at least one processor and at least one memory comprising a software code, which together cause one or more of the above functions of the device 400. For example, the device 400 may comprise a satellite positioning circuits, such as a Global Navigation System (GPS) circuit, on the basis of whose positioning data the location and movement of the device 400 may be adjusted. In addition, the device 400 may have a computer vision circuit, controlling the operation of the cleaning arm and/or collector. On the other hand, the device 400 may be at least partially manually controlled, whereby the device 400 and its functions may be at least partially controlled by a human.

In an embodiment, the device 400 is furthermore adapted to open or close the shield 140. In other words, the device 400 may fold the shield 140 and/or open it so that it protects the plantations 132. The device 400 may comprise a robot hand which carries out these measures based on the commands from the control unit. The robot hand may be of the same entity with the cleaning arm. On the other hand, a user may in some embodiments control the cleaning arms or similar second arm of the device 400, by means of which the shield 140 may be opened or closed. Said arm may have a grabbing arm (e.g. pliers), by means of which the collapsible shield 140 may be grabbed to open it or to fold it.

In some embodiments, the device 400 comprises said vehicle and collector. The device 400 may further comprise means (e.g. said cleaning arm) to clean the solar panels and/or means to fold (that is, to close) and open the shield 140.

In an embodiment, the device 400 for collecting plantations or parts of plantations placed between solar panel structures of a solar panel power plant park comprises: a vehicle 402, 404, 406, 432, 434 which is adapted to move in the intermediate space between two or more solar panel structures, a collector 420 which is adapted to collect plantations or parts of plantations in said intermediate space, and a cleaning arm 410, 412 which is adapted to clean at least one surface of the solar panels while the device is in said intermediate space.

In an embodiment, the vehicle 402, 404, 406 is adapted to move on one or more rails 162, 164 in the intermediate space between said two or more solar panel structures.

In an embodiment, the cleaning arm 410, 412 comprises a hydraulic arm 410 to move the cleaning arm.

In an embodiment, the cleaning arm 410, 412 comprises a brush washing apparatus 412 to clean at least one surface of the solar panels.

In an embodiment, the collector 420 comprises a shaker 422, 424, 426 to remove parts of the plantations 132, such as berries, from the plantations. Figures 5 shows the solar panel arrangement and solar power plant park according to some embodiments. With reference to an embodiment of Figure 5, the solar panel arrangement comprises: at least two solar panel structures 112, 114, 116, 122, 124, 126 which are configured to be installed in a solar power plant park so that an intermediate space 130 is left between the solar panel structures; and a shield 140 which is configured to protect one or more cultivation tanks 232 or plantations 132 in the intermediate space 130, wherein said solar panel structures comprise a two-sided solar panel 510, 520A, 520B, at least one part 510 of which passes radiation 500 through (e.g. solar radiation comprising light, such as visible light), and wherein the shield 140 comprises a partly reflecting surface 530 which is configured to reflect at least part 504 of the radiation 502, passed through by said at least one part 510, back towards the two-sided solar panel 510, 520A, 520B. Thus, both solar panel structures may then have a two-sided solar panel.

As seen in Figure 5, solar radiation 500 may penetrate the part 510 at least partly. The penetrating radiation is denoted with the reference number 502. Radiation 502 may reach the surface 530, which may thus be a shield 140 (e.g. greenhouse or plant protector). The surface 530 may for its part be so configured that it reflects part of the radiation 502 back towards the solar panel 510, 520A, 520B (510, 520A, 520B may form the panel 122). Because the panel 510, 520A, 520B may be two-sided, the reflected radiation 504 may reach the second surface of said panel. This way, a two-sided panel may produce energy more efficiently on both surfaces of the panels. At the same time, said solar panel arrangement may be used to make use of the space 130 between the panels 112, 122 for cultivating plants 132, for example, and use the shield 140 of the plants 132 so that the production of the solar energy itself may be enhanced. As shown in Figure 5, part of the radiation 502 may also find its way inside the shield 140. This is indicated with the reference number 506.

In an embodiment, the two-sided solar panel structure 510, 520A, 520B of the solar panel arrangement comprises at least a radiation penetrating part 510 and a panel part 520A, 520B, said panel part comprising the two-sided solar panel structure. So, the panel 122 may have a part 510 which allows radiation to pass through, and a part or parts 520A, 520B which do not substantially allow radiation to pass through and which produce solar energy from the radiation 500 and radiation 504.

In an embodiment, the panel part 520A, 520B comprises a solar cell and/or thermal collector. Thus, the panel part may have both solar cells and solar thermal collectors, or solar thermal collectors or solar cells, only.

In an embodiment, the two-sided solar panel 510, 520A, 520B is configured to reflect at least part of the radiation 500 towards a second solar panel structure. This is shown in Figure 5 by the panel 112, which, as mentioned in the above, may be similar to the panel 122. So, radiation 590 may reach the panel 112 which may allow part of radiation to penetrate and, on the other hand, produce energy by radiation. However, part of the radiation 590 may be reflected, and the reflection 592 may be led towards a second panel (e.g. panel 122). The reflected radiation 592 may be led, for example, towards the two-sided panel 520A, 520B. The reflection 592 may be controlled by, for example, choosing a suitable panel material and/or by adjusting the angle of the panel 112.

In an embodiment, the surface 530 is configured to reflect part 508 of the radiation 502 towards a second solar panel structure (e.g. panel 112). Thus part of the radiation 502 may be reflected from the surface 530 towards the subsequent panel 112 (may also be a two-sided structure) in addition to part 504 being reflected back towards the two-sided panel structure 510, 520A, 520B. The reflections 504, 508 may be controlled by the shape of the surface 530. The surface 530 may be curved, as shown in Figure 5. The curvature may be arranged so that the outwards surface 530 of the shield 140 (so the external surface) is convex.

The reflectivity of the surface 530 of the shield 140 may be established by using aluminium oxide, for example, or another reflective material. The material may be placed in plastics or glass, for example, by integrating the material into the shield 140, for example. So, the shield 140 may be a dome, for example, having the surface 530. The surface 530 may be partly radiation penetrating and partly radiation reflecting.

In an embodiment, the shield 140 additionally comprises a solar cell structure 532 which is laminated inside the surface 530. Instead of or in addition to the cell structure, solar thermal collector may be used. The shield 140 may thus be a dome that has a synthetic structure which reflects radiation and receives energy through the photoelectric effect, for example. Furthermore, the dome may be adapted so that part of the radiation may pass through the dome.

In an embodiment, the surface 530 is adapted to allow at least part 506 of the radiation 502 having passed through said at least one part 510 to pass through. So, radiation may access the cultivation space 130 to boost the growth of plants, for example.

In an embodiment, the surface 530 is elastic. This allows the shield 140 to last better and/or its better openability.

In an embodiment, the solar cell structure 532 is an organic solar cell structure which comprises an electrode layer and polymer layer. The solar cell structure 532 may be a printed solar cell, for example, printed with the reel to reel method and laminated between films. The formed laminated solar cell structure 532 may thus form the surface 532. Such a solar cell 532 may be placed over glass or plastics, for example. So it fits over the surface 530 or inside it (that is, to be laminated inside the surface 530).

In an embodiment, the solar panel arrangement additionally comprises an automated system (e.g. 151, 152), which is adapted to control the climate of the space 130 covered by the shield 140, and/or the position of the two-sided solar panel 510, 520A, 520B. Controlling the climate may comprise controlling the temperature, humidity and/or amount of light. For example, the automated system may adjust light within the shield 140 so that the plants learn the desired/specific daily rhythm. This way, plants may be grown in the luminous nights of the north, which are to be planted later in a more southern location, such as the equator region. On the other hand, plants from more to the south may be grown up north because the amount of light and temperature may be adjusted to suit them. Controlling the position of the panels or panel may refer to directing the panel towards the sun or adjusting the angle of the panel.

By means of the described solution, the growing season may be extended in cold and/or dark areas, and in addition the retrieval of solar energy may be enhanced. As the climate change progresses, plants may be grown further and further north. In areas of erosion, humidity control may be carried out inside the dome or shield 140, and solar energy obtained at the same time. The solar energy retrieved by the different panels may be fed to and external system (electrical and/or thermal, for example) and/or used for the automation or other control of the solar panel arrangement. For example, solar electricity may be used to adjust the position of the panels and/or to control the climate inside the dome or shield 140.

In an embodiment, with reference to Figure 5, the solar power plant park comprises at least one solar panel arrangement and at least one cultivation tank 232, and/or at least one plantation 132 described in the above.

In an embodiment, the cultivation tank 232 comprises a water cultivation platform, such as a polystyrene plate (sometimes referred to with the term styrox), adapted to float in the cultivation tank. There may be room on the water cultivation platform for one or more plantations 132. In this cultivation form, the cultivation tank 232 may thus have plantations 132 and, for example, fish to be raised.

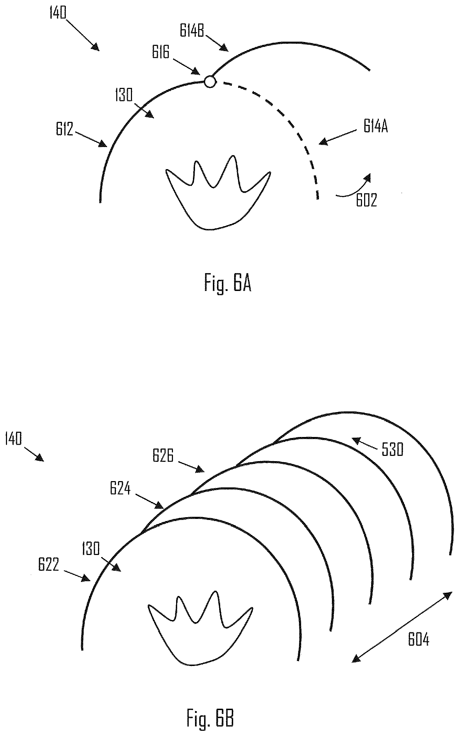

Figures 6A and 6B show closing and opening mechanisms of the shield 140 according to some embodiments. Referring to Figures 6A and 6B, the shield or dome 140 is adapted to be at least partly openable and, on the other hand, closable. This way, inside the shield 140 maintenance measures may be performed, attend to the fish or plantations, and collect the products of the plantations, for example.

With reference to Figure 6A, the shield 140 comprises at least two canopies 612, 614A, 614B, wherein at least one of the canopies is adapted to open and close by means of the joint 616. As may be seen, one of the canopies may be closed (indicated with the reference number 614A) and it may be opened in the direction of the arrow 602 (opened canopy indicated with the reference number 614B).

With reference to Figure 6B, the shield 140 comprises a collapsible structure 622, 624, 626. Between the structures 622, 624, 626, the surface 530 may be left. The structures 622, 624, 626 may be frame section, for example, between which the surface 530 is arranged. Closing and opening may take place in the direction of the arrow 604. Thus, the collapsible structure 622, 624, 626 may be an accordion fold.

In an embodiment, the solar panel arrangement additionally comprises a solar panel matrix, as shown in Figure 3. So, two-sided panels and reflecting protective surfaces 530 may be used in a plurality of solar panels of the matrix and shields 140.

For reasons of clarity, it must be noted that the space 130 between the solar panel structures may be either partly of entirely protected by the shield 140. In an embodiment, the space 130 is partly protected by the shield or dome 140

A person skilled in the art will find it obvious that, as technology advances, the basic idea of the invention may be implemented in many different ways. The invention and its embodiments are thus not restricted to the examples described above but may vary within the scope of the claims.

## Claims

1. A solar panel arrangement comprising:
at least two solar panel structures (112, 114, 116, 122, 124, 126) which are configured to be installed in a solar power plant park so that an intermediate space (130) is left between the solar panel structures; and
a shield (140) which is configured to protect one or more cultivation tanks (232) or plantations (132) in the intermediate space 130,
wherein said solar panel structures comprise a two-sided solar panel (510, 520A, 520B), at least one part (510) of which passes radiation (500) through,
and wherein the shield (140) comprises a partly reflecting surface (530) which is configured to reflect at least part (504) of the radiation (502), passed through by said at least one part (510), back towards the two-sided solar panel (510, 520A, 520B).

2. A solar panel arrangement as claimed in claim 1 wherein the two-sided solar panel structure (510, 520A, 520B) comprises at least a radiation penetrating part (510) and a panel part (520A, 520B) comprising the two-sided solar panel structure.

3. A solar panel arrangement as claimed in claim 2 wherein the panel part (520A, 520B) does not substantially allow radiation to pass through.

4. A solar panel arrangement as claimed in any one of claims 1 to 3, wherein the shield (140) additionally comprises a solar cell structure (532) which is laminated inside the surface (530).

5. A solar panel arrangement as claimed in any one of claims 1 to 4, wherein the surface (530) is adapted to allow at least part (506) of the radiation (502) having passed through said at least one part (510) to pass through.

6. A solar panel arrangement as claimed in any one of claims 1 to 5 wherein the surface (530) is elastic.

7. A solar panel arrangement as claimed in any one of claims 4 to 6, wherein the solar cell structure (532) is an organic solar cell structure which comprises an electrode layer and polymer layer.

8. A solar panel arrangement as claimed in any one of claims 1 to 7 wherein the shield (140) is adapted to be at least partly openable.

9. A solar panel arrangement as claimed in claim 8, wherein the shield (140) comprises at least two canopies (612, 614A, 614B), wherein at least one of the canopies is adapted to open and close by means of a joint (616).

10. A solar panel arrangement as claimed in claim 8 wherein the shield (140) comprises a collapsible structure (622, 624, 626).

11. A solar panel arrangement as claimed in any one of claims 1 to 10, which additionally comprises:
an automated system which is adapted to control the climate of the space (130) covered by the shield (140), and/or the position of the two-sided solar panel (510, 520A, 520B).

12. A solar panel arrangement as claimed in any one of claims 1 to 11 wherein the two-sided solar panel (510, 520A, 520B) is configured to reflect at least part of the radiation (500) towards a second solar panel structure.

13. A solar panel arrangement as claimed in any one of claims 2 to 12, wherein the panel part (520A, 520B) comprises a solar cell and/or a thermal collector.

14. A solar panel arrangement as claimed in any one of claims 1 to 13 wherein the surface (530) is configured to reflect part (508) of the radiation (502) towards a second solar panel structure.

15. A solar power plant park which comprises at least one solar panel arrangement according to any one of claims 1 to 14, and at least one cultivation tank (232), and/or at least one plantation (132).
